# EUROPEAN PATENT APPLICATION

(11) **EP 1 645 977 A2**
(43) Date of publication of application: **12.04.2006**
(21) Application number: 05107182.7
(22) Date of filing: 04.08.2005
(51) Int. Cl.: G06F 17/30

(54) **Partially materialized views**

(30) Priority: 24.08.2004 US 604401; 21.10.2004 US 971600
(71) Applicant: MICROSOFT CORPORATION, Redmond, Washington 98052-6399 (US)
(72) Inventor: Zhou, Jingren, Redmond, WA 98052 (US); Goldstein, Jonathan D., Redmond, WA 98052 (US); Larson, Per-Ake, Redmond, WA 98052 (US)
(74) Representative: Zimmer, Franz-Josef

(57) **Abstract**

Partially materialized views in the field of database systems are described herein. A method of partially materializing a view computed from one or more source tables comprises generating a view definition including a query expression and at least one control predicate referencing at least one control table. The query expression specifies the maximal content of the view, that is, the complete set of records that could be materialized. One or more control predicates and the contents of one or more control tables restrict what records are actually materialized and stored in the view. This allows the content of the partially materialized view to be adjusted simply by updating one or more control tables.

## Description

### CROSS REFERENCE TO RELATED APPLICATION

This application claims the benefit of U.S. Provisional Patent Application No. 60/604401, filed August 24, 2004, which is incorporated herein by reference.

### FIELD OF THE INVENTION

The present disclosure relates generally to the field of databases and, in particular, the present disclosure concerns partially materialized views.

### BACKGROUND

When a user desires information from a database, the user issues a query that computes the required information from the data in the database. A query typically references one or more base tables or views of the database. A materialized view is a precomputed result that may be used to compute part or all of query instead of computing it from base tables. In cases when the fully materialized view is much smaller than the base tables or the replaced expression is expensive to compute, the time to evaluate the query may be greatly reduced. Updates of any of the view's source tables are typically propagated to the fully materialized view using view maintenance techniques, so that the materialized view is consistent with the source tables.

### SUMMARY

The following presents a simplified summary of the disclosure in order to provide a basic understanding to the reader. This summary is not an exhaustive or limiting overview of the disclosure. The summary is not provided to identify key and/or critical elements of the invention, delineate the scope of the invention, or limit the scope of the invention in any way. Its sole purpose is to present some of the concepts disclosed in a simplified form, as an introduction to the more detailed description that is presented later.

Relational database systems allow users to create views and reference them in queries in the same way as base tables. A view is defined by a query expression. In current database systems, a view is either fully materialized or not materialized at all. Virtual views are views where none ot the records in the view result are materialized, In fully materialized views, every record in the result of the query expression is materialized. That is, every row or record is computed, stored and maintained during updates of the source tables.

Fully materialized views may have the drawback that computing, storing, and maintaining all its records may become increasingly expensive with increasing source table sizes and update rates. Maintenance can be costly when the fully materialized view is large and frequently updated. If only a small subset of the fully materialized view is used over a period of time, many records that are never used may be unnecessarily kept up to date, thereby adding to the processing time for updates. Moreover, fully materialized views, in some cases, cannot be modified rapidly enough to adjust to changing demands. Modifying a fully materialized view requires the current view to be deleted and a new one created, including materializing the new view 'from scratch'. Furthermore, this may require re-compiling all query plans referencing the fully materialized view.

A partially materialized view is a view where only a subset of the rows or records in the query result may be materialized. For example, instead of materializing all records in the query result, a portion of those records, such as the most frequently requested records, may be materialized.

Which records in the view are materialized may be specified by a view defining expression referencing the contents of one or more control tables associated with the view. The control tables may specify discrete parameter values, parameter intervals, upper and/or lower parameter bounds, and/or may specify records that are not to be materialized to identify the subset of records that are included in the partially materialized view. For example, a view containing customer orders may have a control table containing one of more customer IDs that specify which customers' orders are currently materialized in the view.

Which records are included in the partially materialized view may be changed by changing entries in its associated control tables. In this example, simply adding or deleting a customer ID in the control table causes the customer's orders to be added or deleted, respectively, from the view. Changing which records are included in the partially materialized view may not require recompiling of a query plan which references the partially materialized view. Rather than replacing a partially materialized view with a modified partially materialized view, as with fully materialized views, the partially materialized view may be updated using known view maintenance and updating algorithms.

Before an incoming query can use a partially materialized view, it may be verified that the view currently contains the records required by the query. Typically, this may involve checking whether certain rows exist in the control table. Returning to the example view, a query retrieving all orders for a particular customer may be able to use the view. However, before using the view, the presence of the customer's ID may be checked in the control table. If it is determined that the incoming query cannot use the partially materialized view, the query may be evaluated using the data in the source table or tables.

These and other objects and advantages of the system constructed in accordance with an exemplary embodiment of the invention are more completely described in conjunction with the accompanying drawings.

### BRIEF DESCRIPTION OF THE DRAWINGS

Figure 1 is a schematic depiction of an example computer system used in practicing an exemplary embodiment of partially materialized views;
Figure 2 is a schematic illustration of an example database system used in practicing an exemplary embodiment of partially materialized views;
Figure 3 is a schematic illustration of an example data structure and database of the database system of Figure 2;
Figure 4 is a flow chart that illustrates an example method of creating the partially materialized view of Figure 3;
Figure 5 illustrates an example application of a query expression and control tables to a source table to create a partially materialized view in one embodiment;
Figure 6 illustrates an application of an example control table to the source table illustrated in Figure 5 to define a partially materialized view in one embodiment;
Figure 7 illustrates an application of an example control table to the source table illustrated in Figure 5 to define a partially materialized view in another embodiment;
Figure 8 illustrates an application of an example control table to the source table illustrated in Figure 5 to define a partially materialized view in yet another embodiment;
Figure 9 illustrates an application of an example control table to the source table illustrated in Figure 5 to define a partially materialized view in one embodiment;
Figure 10 illustrates an application of an example control table to the source table illustrated in Figure 5 to define a partially materialized view in another embodiment;
Figure 11 illustrates an application of an example control table to the source table illustrated in Figure 5 to define a partially materialized view in yet another embodiment;
Figure 12 illustrates an application of example multiple control tables to the source table illustrated in Figure 5 to define a partially materialized view in another embodiment;
Figure 13 is a flow chart that illustrates an example method of view matching of a partially materialized view in one embodiment;
Figure 14 is an example partial view graph;
Figure 15 is an example partial view graph;
Figure 16 is an example partial view graph;
Figure 17 is an example partial view graph; and
Figure 18 is a flow chart that illustrates an example method of view matching of the prior art.

### DETAILED DESCRIPTION

### Exemplary Operating Environment

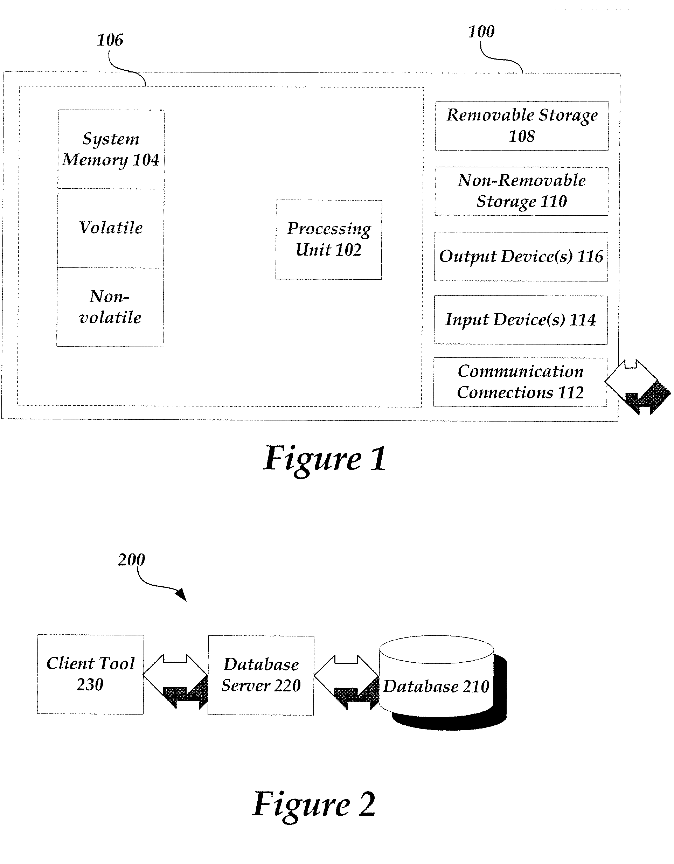

Figure 1 and the following discussion are intended to provide a brief, general description of a suitable computing environment in which the invention may be implemented. The operating environment of Figure 1 is only one example of a suitable operating environment and is not intended to suggest any limitation as to the scope of use or functionality of the operating environment. Other well known computing systems, environments, and/or configurations that may be suitable for use with the partially materialized views described herein include, but are not limited to, personal computers, server computers, hand-held or laptop devices, multiprocessor systems, micro-processor based systems, programmable consumer electronics, network personal computers, mini computers, mainframe computers, distributed computing environments that include any of the above systems or devices, and the line.

Although not required, the partially materialized views will be described in the general context of computer-executable instructions, such as program modules, being executed by one or more computers or other devices. Generally, program modules include routines, programs, objects, components, data structures, etc., that perform particular tasks or implement particular abstract data types. Typically, the functionality of the program modules may be combined or distributed as desired in various environments.

With reference to Figure 1, an exemplary system for implementing the partially materialized view includes a computing device, such as computer device 100. In its most basic configuration, computing device 100 typically includes at least one processing unit 102 and memory 104. Depending on the exact configuration and type of computing device, memory 104 may be volatile (such as RAM), non-volatile (such as ROM, flash memory, etc.) or some combination of the two. This most basic configuration is illustrated in Figure 1 by dashed line 106. Additionally, device 100 may also have additional features and/or functionality. For example, device 100 may also include additional storage (e.g., removable and/or non-removable) including, but not limited to, magnetic or optical disks or tape. Such additional storage is illustrated in Figure 1 by removable storage 108 and non-removable storage 110. Computer storage media includes volatile and nonvolatile, removable and non-removable media implemented in any method or technology for storage of information such as computer readable instructions, data structures, program modules, or other data. Memory 104, removable storage 108, and non-removable storage 110 are all examples of computer storage media. Computer storage media includes, but is not limited to, RAM, ROM, EEPROM, flash memory or other memory technology, CD-ROM, digital versatile disks (DVDs) or other optical storage, magnetic cassettes, magnetic tape, magnetic disk storage or other magnetic storage devices, or any other medium which can be used to store the desired information and which can be accessed by device 100. Any such computer storage media may be part of device 100.

Device 100 may also contain communication connection(s) 112 that allow the device 100 to communicate with other devices. Communications connection(s) 112 is an example of communication media. Communication media typically embodies computer readable instructions, data structures, program modules or other data in a modulated data signal such as a carrier wave or other transport mechanism and includes any information delivery media. The term 'modulated data signal' means a signal that has one or more of it characteristics set or change in such a manner as to encode information in the signal. By way of example, and not limitation, communication media includes wired media such as a wired network or direct-wired connection, and wireless media such as acoustic, radio frequency, infrared, and other wireless media. The term computer readable media as used herein includes both storage media and communication media.

Device 100 may also have input device(s) 114 such as keyboard, mouse, pen, voice input device, touch input device, and/or any other input device. Output device(s) 116 such as display, speakers, printer, and/or any other output device may also be included.

Figure 2 illustrates one example of a computer database system 200 for supporting partially materialized views. Database system 200 comprises a database 210, a database server 220, and a client tool 230. Database system 200 manages the storage and retrieval of data in database 210 in accordance with data manipulation statements or queries presented to database server 220 by client tool 230, for example. Client tool 230 may be, for example, a database application, a user interface tool, On Line Analytical Processing (OLAP) or data mining middleware, an OLAP or data mining application server, or any other suitable database interface component.

Database 210 comprises at least one source table of data representing relations over the data. Each source table comprises a set of records or tuples of data stored in one or more data fields. The records of a table are also referred to as rows, and the data fields of records in a table are also referred to as columns. A source table may be any kind of data store, including a relational database, object-oriented database, unstructured database, an in-memory database, or other data store. A source table may be constructed using a flat file system such as ACSII text, a binary file, data transmitted across a communication network, or any other file system. Notwithstanding these possible implementations of the foregoing source table, the term source table as used herein refers to any data that is collected and stored in any manner accessible by a computer.

Database server 220 processes queries, for example, to retrieve, insert, delete, and/or update data in database 210. Database system 200 may support any suitable query language, such as Structured Query Language (SQL) and the like, to define the queries that may be processed by database server 620. Suitable SQL queries may include, for example, Select, Insert, Delete, and Update statements. Database server 220 for one embodiment comprises the Microsoft® SQL Server available from Microsoft Corporation of Redmond, Washington; the Oracle database servers available from Oracle Corporation of Redwood Shores, California, and DB2 Universal Database Systems available from International Business Machines of Armonk, New York. Database server 220 may generate efficient execution plans for queries and may optimize a particular query expression.

Database server 220 and client tool 230 may be implemented as program modules or computer-executable instructions and may be stored on any suitable computer-readable media for execution in a suitable operating environment, such as the computing environment of Figure 1 for example. The data of database 210 may be implemented in the form of one or more suitable data structures and may also be stored on any suitable computer-readable medium.

### Partially Materialized Views

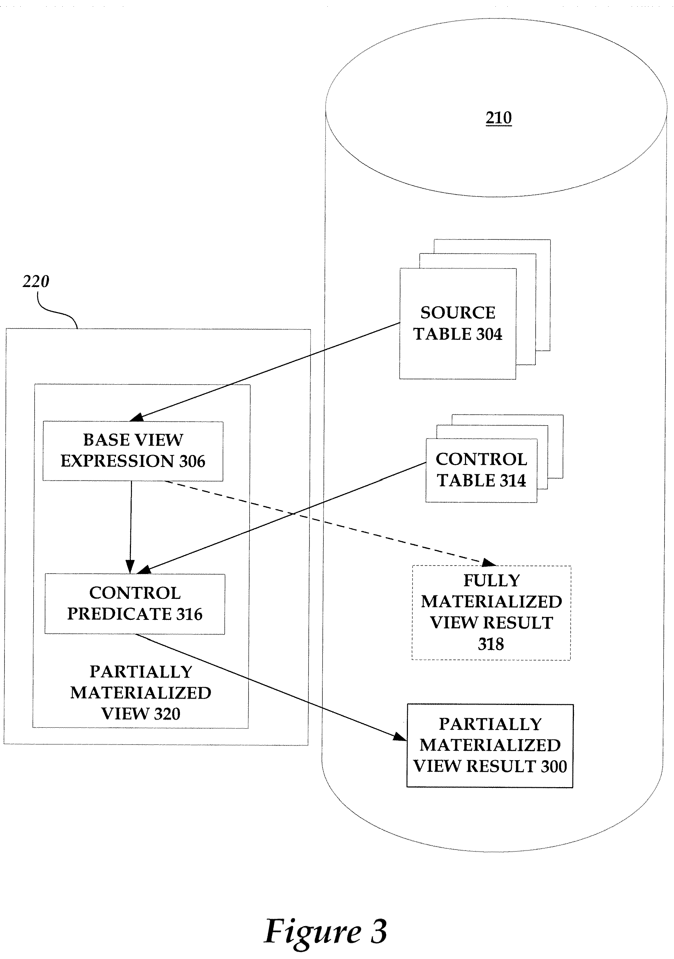

Figures 3-12 are described with reference to partially materialized view in a database 210 of Figure 2. Referring to Figure 3, a fully materialized view result 318 is a result of evaluating a view expression 306 against one or more source tables 304. With fully materialized views, all the records of the query result produced by query expression 306 are computed and stored. The fully materialized view result may be quite large. For example, suppose the view is defined as the join of a parts table and a supplier table and there are 500,000 parts and each part has on average two suppliers. Then the fully materialized view would contain around 1,000,000 records. Moreover, with a fully materialized view, all of the records within the materialized view must be kept up to date, even the ones that are never used by any query.

In contrast, a partially materialized view 300 is a view where a subset of the rows of the result from view expression 306 are materialized, i.e., computed and stored. The definition of the partially materialized view defining expression 320 includes a view expression 306 and an additional control predicate 316 that further restricts the view based on the contents of one or more control tables 314. As a result, if partially materialized views are used, not all of the records of the result based upon a particular view expression are included in the partially materialized view. Partially materialized views may be easily changed, and in some cases, queries may continue to run against changed partially materialized views without requiring recompilation.

### Control Tables

The subset of records that are materialized in the partially materialized view 300 may be identified by any suitable method. Referring to Figure 3, view defining expression 320 includes the view expression 306 defining the results of the fully materialized view 318 but further limits those results by a control predicate referencing one or more control tables 314. In this manner, the view defining expression 320 including the query expression 306 and the control predicate 316, when applied against the source table(s) 304 and control table(s) 314, define which records will occur in the partially materialized view result 300.

The control predicate identifies the subset of records to be materialized by specifying desired restrictions between values in a control table and values in the view's source tables. It is to be appreciated that any representation of data in the control tables, views, and/or source tables may have any suitable representation of parameters, their attributes, and their values. The control predicate is analogous to a parameterized Boolean function and the control table specifies for which actual parameter values the function evaluates to true. Referring to Fig. 3, the control predicate relates column values of a row or record of the control table 314 with column values in records of the view's source tables 304 indicating a desired restriction between these column values. The desired relationship between column values, such as an equivalency, a non-equivalency, a range, a pattern of symbols (such as by string matching), and the like, may be indicated in any suitable manner. For example, to identify the subset of records that are included in the partially materialized view, a value or other indicator placed in a column value in the control table 314 may specify an equivalency value, records that are not to be materialized, and/or an upper and/or lower bound. The control predicate may connect several simpler control predicates together with logical connectives such as 'AND' and 'OR'.

Although the control table is discussed herein as having rows and columns, the control table and the control predicate may have any suitable format and/or syntax to communicate the restrictions on the records of the source table to be materialized in the partially materialized view. Like the source table 304 discussed with reference to Fig. 2, the control table 314 may be any kind of data store which refers to any data collected and stored in any manner accessible by a computer. Moreover, although the control table as described herein indicates a predicate in a record of the control table with parameter values indicated in the columns, it is to be appreciated that any parameters, formats, and/or logical operators may be indicated by rows and columns of the control table. For example, columns of a control table may indicate multiple predicates and rows of the control table may indicate parameter restrictions.

### Method to Create a Partially Materialized View

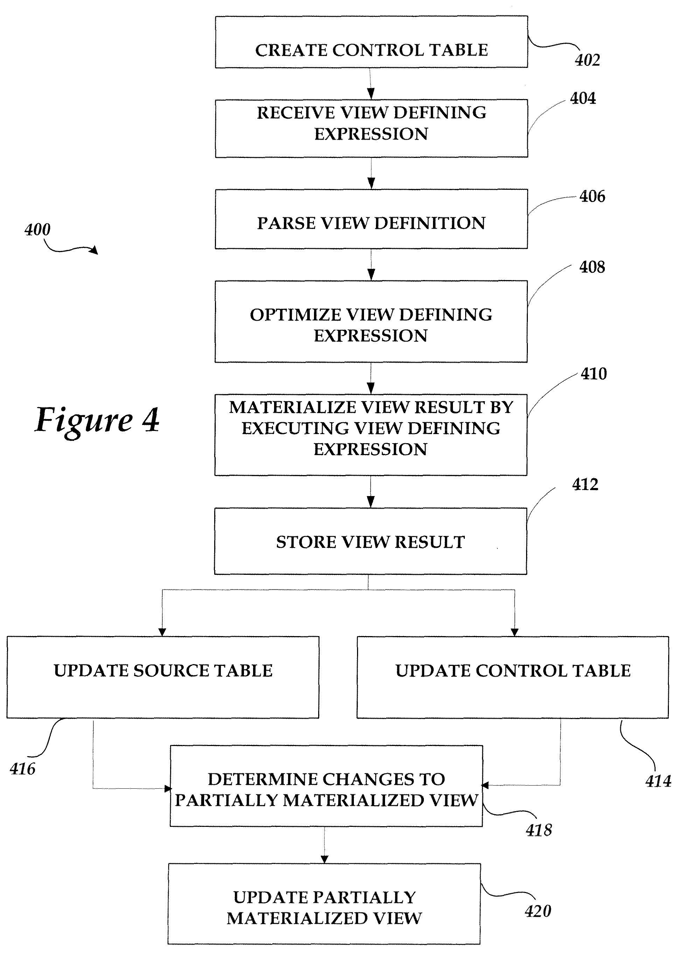

Figure 4 illustrates an example method 400 of creating a partially materialized view, such as partially materialized view 300 of Fig. 3. Referring to Figure 3, at least one control table may be created 402. The records stored in the control table may be generated based on input from the client component 230 and/or the database server 220 of Figure 2. A view defining expression defining the partially materialized view may be received 404, such as from the client component 230 of Figure 2. The view defining expression may be then be parsed 406 and checked for correctness. The view defining expression may be optimized 408, such as by a query optimizer of the database server 220 of Figure 2. A query optimizer, or other suitable component, may generate an optimized query plan for the view defining expression including any control predicates. The database system then executes the query plan 410 thereby producing the set of records comprising the result of the partially materialized view. The identified subset of records is stored 412 to partially materialize the view, which completes creation of the view. As noted above, the partially materialized view may be stored in a manner similar to that of a fully materialized view.

Figure 4 also illustrates an example method of modifying a created partially materialized view. In some cases, the source table(s) may be modified 416 or the control tables may be modified 414 to update data fields stored in the database. To propagate those modifications to the corresponding partially materialized view, the resulting changes to the partially materialized view may be determined 418 using any appropriate method and then update 420 the partially materialized view accordingly. For example, the partially materialized view may be maintained in a manner similar to how a database server maintains a fully materialized view using view maintenance policies or any other cache maintenance policy. General techniques for incrementally maintaining a fully materialized view are described in Gupta et al., "Maintaining Views Incrementally," SIGMOD, 1993, incorporated by reference herein. Referring to Figure 2, the database server 220 may incrementally update the records stored in the partially materialized view 300 of Figure 3 with updated data from the source tables 304.

Referring to Figure 2, to modify a control table, a user may manually change the control table using the client tool 230 or the database server 220 may automatically modify the control table. For example, manual and/or automatic modification of records in a control table can be dynamic, e.g., in response to events or other inputs. The database server 220 of Figure 2 may track which records are used by queries submitted by users, and dynamically modify the control table(s) according to a predetermined selection criteria including most popular queries in a period oftime, most expensive queries, most recent queries, least recently used records, and the like. These criteria may be stored in any appropriate manner such as in a systems catalog or meta-data.

Referring to Figure 3, if a control table 314 is modified, normal cache maintenance policies of the database server 220 of Fig. 2 may automatically update the partially materialized view 300. For example, values contained within the control tables, that are used as upper and lower bounds in a control predicate, can be changed, without changing the SELECT expressions of the view defining expression that define the records that are included in the partially materialized view. As a result, the partially materialized view can be updated with only the relevant portions of the control table using incremental view maintenance, rather than fully recomputed, e.g., replaced.

Changing the records that are included in the partially materialized view may not require recompiling of a query plan at run time. More particularly, incremental view maintenance typically allows existing query plans to remain valid and operational, rather than requiring recompilation whenever a partially materialized view is updated. For example, as discussed further below, determination of whether a query may be run on a partially materialized view may occur at execution or run time of the query. In this manner, the testing at run time which evaluates whether a query may be run against a partially materialized view may be evaluated against the updated partially materialized view, which as a result, reduces the need to recompile a query plan.

### Nomenclature for Partially Materialized Views

Referring to Figure 2, the database management system 200 may support nomenclature that allows a client 260 to define a partially materialized view, such as through a view defining expression 316 including a query expression 306 and one or more control tables 314 as shown in Fig. 3.

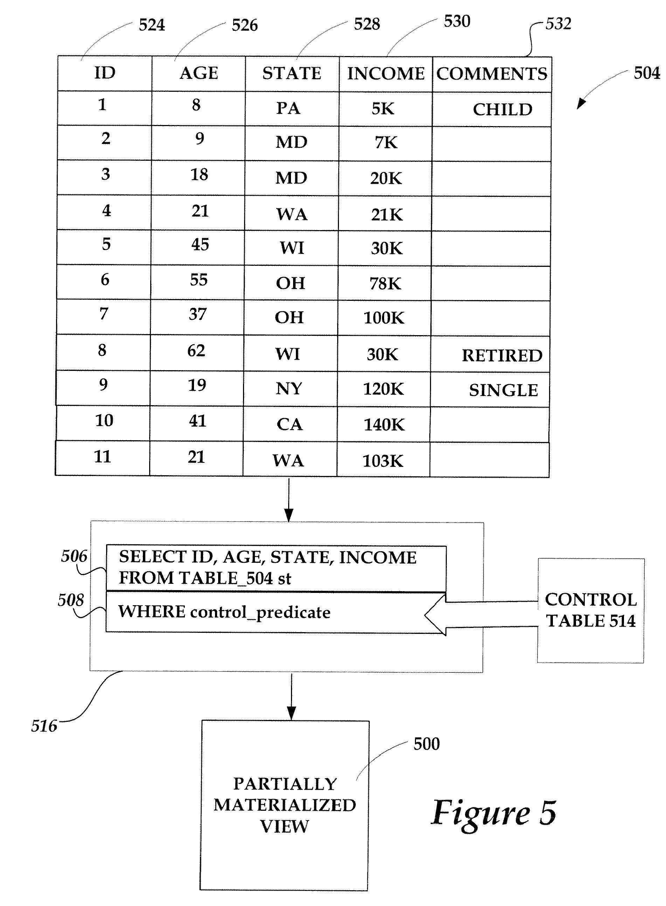

The query defining expressions described herein may be implemented in any suitable database language on any suitable database server or other computer system such as Microsoft Corporation's SQL Server® system, Oracle Corporation's database servers, International Business Systems DB2, and the like. The following examples in the SQL language illustrate nomenclature that may be used to implement the view defining expressions and the partially materialized views of Figures 5-12. In these examples, source table 504 of Figure 5 is referred to as "T".

Referring to Figure 3, a fully materialized view 318 may be determined from execution of the base view expression V_{b} 306 against the source table 304. The join and selection predicate of the base view expression V_{b} may be indicated as Pᵥ. To create a partially materialized view, the base view expression V_{b} may be used as the base and materialization may be controlled by a control predicate P_{c}(p₁, p₂, ..., pₙ) where p₁, p₂, ..., pₙ are parameters. Control predicate P_{c} may be a predicate involving non-aggregated output columns of V_{b} and parameters p₁, p₂, ..., pₙ. For each column of V_{b} which appears in control predicate Pc, its column equivalence class may be computed. C denotes a union of these column equivalence classes. C is called the group of controlled columns because columns in C are controlled by the control predicate P_{c} in one way or another.

A control table Cₜ with a finite number of rows may be generated. Each row has n columns, one for each parameter p_{1,} p₂, ..., p_{n.} An example declaration of a control table Cₜ and a partially materialized view pmv is shown below.
CREATE TABLE Cₜ ((C₁ typeof(p₁), C₂ typeof(p₂), ..., Cₙ typeof(pₙ))
CREATE VIEW pmv
SELECT V_{b}.*
From V_{b}
WHERE EXISTS (SELECT * FROM Cₜ WHERE P_{c}(Cₜ.C₁, Cₜ.C₂, ..., Cₜ.Cₙ))

The declaration of the partially materialized view may include an EXISTS operator which defines what conditions a record should satisfy in order to be included in the partially materialized view. The EXISTS clause in the declaration above restricts the tuples or records to be materialized in partially materialized view pmv to those satisfying the control predicate P_{c} for some parameter combination currently stored in control table Cₜ. Hence, by adding and deleting tuples from control table Cₜ, the contents of the partially materialized view pmv may be controlled. As noted above, V_{b} is a shorthand reference to the underlying base view which may be defined by a query expression referencing a source tables and/or other views. However, it is to be appreciated that any view may be made into a partially materialized view by adding a suitable control predicate and creating the necessary control table(s). The notation typeof(pᵢ) is shorthand for "of a type matching the type of parameter pᵢ".

Initially, the control table is empty until populated with values in the fields initiated by the CREATE TABLE expression. Accordingly, the resulting partially materialized view is also empty. To materialize information, the user through the client tool 230 or some component of the database server 220 of Figure 2 may populate at least one row of the control table Cₜ with a value. Normal incremental view maintenance may then be used to correctly update the partially materialized view pmv to include the records which now meet the control predicate of the partially materialized view.

In some cases, general view maintenance algorithms may not directly support an EXIST sub-query in the view defining expression. However, the view defining expression of a partially materialized view may be converted into one which does not contain an EXIST sub-query, e.g., is a select-project-join. In this manner, a partially materialized view may be incrementally maintained with general view maintenance algorithms provided the base view V_{b} is incrementally maintainable.

The example definition view pmv above can be converted to the equivalent expression shown below
CREATE VIEW pmv' as
SELECT V_{b}.*
From V_{b}, Cₜ
WHERE P_{c}(Cₜ.C₁, Cₜ.C₂, ..., Cₜ.Cₙ))
GROUP BY V_{b}.key

The partially materialized view pmv' contains the same number of rows as the view pmv created by the first example view definition shown above with the EXISTS sub-query. The view pmv' may be a regular select-project-join-group view and can be incrementally maintained by general view maintenance algorithms.

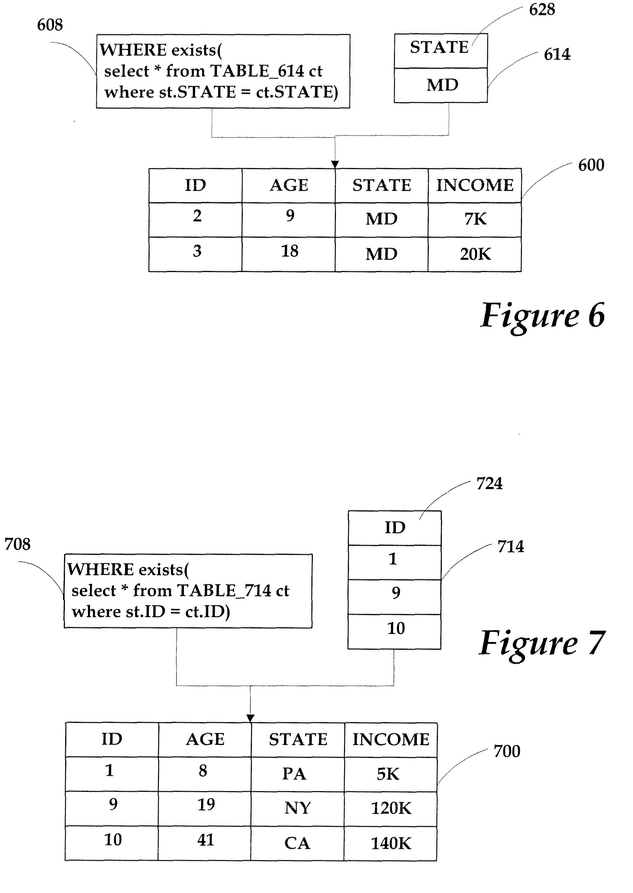

Evaluation of the predicate P_{c} against the base view V_{b} and the control table Cₜ may return more than one tuple. Consequently, the rows in the partial view pmv' may contain duplicates. To remove duplicated rows, a GROUP BY operation may be added to the partially materialized view declaration as shown above. If it is known that the EXIST sub-query only returns one row (for example partially materialized views 600, 700, 800, 900, 1000, 1100, 1200 shown in Figs. 6-12 below), the view declaration may remove the GROUP BY operator.

As noted above, more than one control table may be used to define a partially materialized view and/or execution of the query expression and control table predicates may return duplicate rows from the source table. To assist in view maintenance, e.g., propagating updated of control tables and/or source tables to the partially materialized view, a COUNT column may be added to the partially materialized view which indicates the number and/or identify of control tables and/or predicates that are met by that record of the partially materialized view. For example, an example declaration of two control tables C2ₜ and C2ₜ and partially materialized view pmv" may be shown as below.
CREATE TABLE C1ₜ (C1₁ typeof(p₁), C1₂ typeof(p₂), ..., C1ₙ typeof(pₙ))
CREATE TABLE C2ₜ ((C2₁ typeof(p₁), C2₂ typeof(p₂), ..., C2ₘ typeof(pₘ))
CREATE VIEW pmv" as
SELECT V_{b}.*, COUNT(*) as N
From V_{b}, C1ₜ, C2ₜ
WHERE P1_{c}(C1ₜ.C1₁, C1ₜ.C1₂, ..., C1ₜ.C1ₙ) AND
P2_{c}(C2ₜ.C2_{1,} C2ₜ.C2₂, ..., C2ₜ.C2ₘ)
GROUP BY V_{b}.key

The COUNT column may be used to determine which records of the partially materialized view are to be deleted when a query expression or control table predicate is updated, as discussed further below. If the COUNT value becomes 0 for any record, then the row may be removed from the partially materialized view.

### Example Partially Materialized Views

Figure 5 schematically shows an example of a source table 504 and an example query expression 506 that will be used to illustrate different types of control predicates and control tables. Different instances of the control predicate 508, and control table(s) 514 will be shown together with the resulting instances of the partially materialized view 500. The query expression 506 illustrated by Figure 5 is just one example of a possible query expression defining a view. The query expression 506 may be any query expression indicating a retrieval request of any combination of data available in one or more source tables 504 and/or any materialized view.

In the example of Figure 5, the query expression 506, if executed against the source table 504 without the control predicate, defines a query result having the columns ID 524, AGE 526, STATE 528, and INCOME 530 and containing all the rows of the source table 504. If this query result were materialized, it would result in a fully materialized view including all records of the source table 504 but only storing the indicated data fields of ID 524, AGE 526, STATE 528, and INCOME 530.

### Example Control Predicates and Control Tables

Figures 6-12 illustrate examples of control predicates and control tables and the resulting partially materialized views obtained when applied to query expression 506 and source table 504 illustrated in Figure 5. The types and combinations of control tables illustrated by Figures 6-12 are just a few examples of the variety of control tables that may be employed. It should be readily apparent that control tables or any other suitable data structure or set of instructions or operations can be employed that accommodate any type or combination of query predicates that may restrict the materialization of a query result. Although the control tables and resulting partially materialized views illustrated in Figure 6-12 are shown with column heading, the column heading are not require and are included herein for descriptive clarity.

### Figure 6

Figures 6 and 7 each illustrate a control table that includes discrete column values to be used in a control predicate specifying an equality restriction. In the example of Figure 6, the control table 614 includes a single column 628 STATE. The control predicate 608 states that a view record is to be materialized only if the control table 614 contains a row with a STATE value equal to the STATE value of the STATE column 528 of the source table 504 shown in Figure 5. The control table 614 contains a single row with value "MD" and, consequently, only view records with the value "MD" in the STATE column will occur in the partially materialized view result 600.

An example declaration for the control table 614, partially materialized view 600, and query expression 506 of Figure 6 are shown below using syntax appropriate for Microsoft SQL Server:
CREATE TABLE TABLE_614 (STATE char(2) primary key)
CREATE VIEW pmv600 WITH SCHEMABINDING AS
SELECT T.ID, T.AGE, T.STATE, T.INCOME
From T
WHERE EXISTS (SELECT * FROM TABLE_614 ct WHERE
T.STATE=ct.STATE)
CREATE UNIQUE CLUSTERED INDEX pmv600_clu
ON pmv600(ID)

The CREATE TABLE expression above creates the control table 614 of Figure 6 with parameter column STATE. The query expression of SELECT T.ID, T.AGE, T.STATE, T.INCOME determines the columns from the source table 504 (T) of Figure 5 included in the partially materialized view 600. The EXISTS operator referencing the control table TABLE_614 determines the records included in the partially materialized view pmv600, namely, those records from the source table 504 (T) of Figure 5 that have a STATE value (T.STATE) that is equivalent to a value in some row of the control table TABLE_614. The CLUSTERED INDEX expression triggers actual creation of the partially materialized view pmv600. As noted above, the control table TABLE_614 and partially materialized view pmv600 are initially empty of any records. To materialize information in partially materialized view pmv600, the user through client 230 or some component of the database server 220 of Figure 2 may populate at least one row of the control table TABLE_614 with a value. Normal incremental view maintenance may correctly update the partially materialized view pmv600 to include the records which meet the control predicate when evaluated against the control table TABLE_614 illustrated in Figure 6.

An EXISTS operator may be converted into an inner join to produce an equivalent declaration of the view definition. For example, since the STATE parameter is also the primary key, the sub-query of the EXISTS expression may be converted into an inner select-project-join expression. For example, the declaration of pmv600 given above may be converted into:
CREATE VIEW pmv600 WITH SCHEMABINDING AS
SELECT T.ID, T.AGE, T.STATE, T.INCOME
From T, TABLE_614 ct
WHERE T.STATE=ct.STATE

The resulting partially materialized view pmv600 that is defined by the select-project-join expression may be maintained using standard view maintenance techniques, such as those used to maintain fully materialized views.

### Figure 7

In the example of Figure 7, the control table 714 includes an ID column 724 and contains rows with values "1," "9," and "10". It should be readily appreciated that nay number of equivalency values may be included in the control table. The control predicate 708 states that a view record of the ID column 524 of the source table 504 of Figure 5 is to be materialized only if its ID value matches the ID value in one of the rows in the control table 714. The resulting partially materialized view 700 of Figure 7 includes ID, AGE, STATE, and INCOME columns as specified by the query expression 506; the records of the partially materialized view 700 includes only those records specified by the control predicate when evaluated against the control table 714 (i.e., ID=1, ID=9, or ID=10). In this example, the SQL language nomenclature implies the 'or' between multiple values indicated in a control table. It is to be appreciated that other desired logical operations, e.g., 'and', and the like, may be implemented by the type of control predicate. Additionally, other query languages may imply pother logical operators between multiple records of a control table, and it is to be appreciated that any other appropriate operator may be suitable.

An example declaration for the control table 714, partially materialized view 700, and query expression 506 of Figure 7 is shown below:
CREATE TABLE TABLE_714 (ID int primary key)
CREATE VIEW pmv700 WITH SCHEMABINDING AS
SELECT T.ID, T.AGE, T.STATE, T.INCOME
From T
WHERE EXISTS(SELECT * FROM TABLE_714 ct WHERE T.ID=ct.ID)
CREATE UNIQUE CLUSTERED INDEX pmv700_clu
ON pmv700(ID)

The CREATE TABLE expression creates the control table 714 of Figure 7 with parameter column ID. The query expression of SELECT T.ID, T.AGE, T.STATE, T.INCOME determines the columns from the source table 504 (T) of Figure 5 included in the partially materialized view 700. The WHERE statement, or the alternative EXISTS expression described above with reference to Figure 6 nomenclature, references the control table TABLE_714 and determines the records included in the partially materialized view pmv700, namely those records from the source table 504 (T) of Figure 5 that have an ID value (T.ID) that is equivalent to a value in some row of the control table ct714. The CLUSTERED INDEX expression triggers creation of the partially materialized view pmv700. As noted above, the control table TABLE_714 and resulting partially materialized view pmv700 are empty of any records. To materialize information in partially materialized view pmv700, the user through client 230 or some component of the database server 220 of Figure 2 may populate at least one row of the control table TABLE_714 with a value (e.g., 1, 9, and 10). Normal incremental view maintenance may then correctly update the partially materialized view pmv700 to include the records which satisfy the control predicate.

### Figure 8

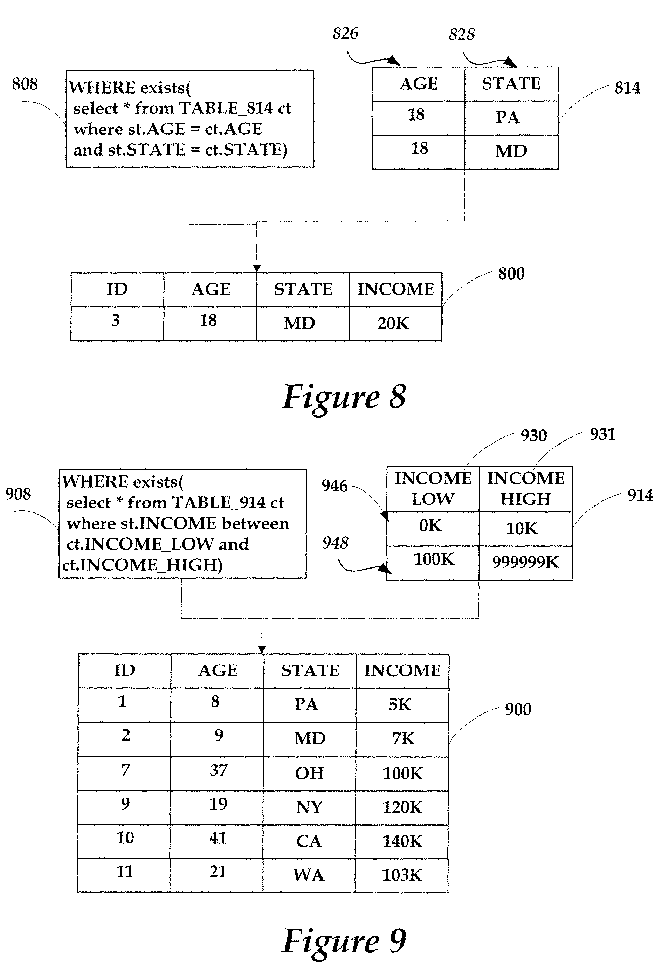

The control table 814 illustrated by Figure 8 includes two columns (AGE 826, STATE 828), but it should be readily apparent that any number of columns may be included in a control table. The control predicate 808 states that a view record qualifies only if a row with matching values on both AGE and STATE exists in the control table 814. It should be appreciated that the control predicate may combine the values obtained from a record in the control table in many different ways including, but not limited to, logical expressions (e.g., AND, OR, NOT), symbol delimiters (e.g., '&', ','), columnar or row delimiters, and the like. In this manner, a record from the source table 504 of Fig. 5 that meets all the limitations defined by the control predicate will be included in the partially materialized view 800. In the example of Figure 8, the only record in the source table 504 of Figure 5 that satisfies the predicate (AGE=18 and STATE=PA) or the predicate (AGE =18 and STATE=MD) is the third row of the source table 504. As a result, the partially materialized view 800 includes only one row.

An example declaration for the control table 814, partially materialized view 800, and query expression 506 of Figure 8 is shown below:
CREATE TABLE TABLE_814 (AGE int, STATE char(2), primary key (AGE, STATE))
CREATE VIEW pmv800 WITH SCHEMABINDING AS
SELECT T.ID, T.AGE, T.STATE, T.INCOME
From T
WHERE EXISTS(SELECT * FROM TABLE_814 ct WHERE
T.AGE = ct.AGE AND T.STATE = ct.STATE
CREATE UNIQUE CLUSTERED INDEX pmv800_clu
ON pmv800(ID)

The CREATE TABLE expression creates the control table 814 of Figure 8 with parameter columns AGE and STATE. The query expression of SELECT T.ID, T.AGE, T.STATE, T.INCOME determines the columns from the source table 504 (T) of Figure 5 included in the partially materialized view 800. The WHERE statement, or the alternative EXISTS expression, references the control table TABLE_814 and determines the records included in the partially materialized view pmv800, namely those records an AGE value (T.AGE) that is equivalent to a value in some row of the control table ct814 and a STATE value (T.STATE) that is equivalent to a value in the same row of the control table TABLE_814. The CLUSTERED INDEX expression triggers creation of the partially materialized view pmv800. As noted above, the control table TABLE_814 and resulting partially materialized view pmv800 are initially empty of any records. To materialize information in partially materialized view pmv800, the user through client 230 or some component of the database server 220 of Figure 2 may populate a row of the control table TABLE_814 with values (18 and 'PA') and another row with (18 and `MD'). Normal incremental view maintenance may then be used to correctly update the partially materialized view pmv800 to include the records which meet the control predicate when evaluated against the control table TABLE_814 illustrated in Figure 8.

### Figure 9

Figure 9 illustrates a control predicate 908 that specifies a range restriction where the bounds are provided by control table 914 comprised of an INCOME_LOW column 930 and an INCOME_HIGH column 931. Any suitable indication of a range of values may be appropriate including mathematical operators or symbols (e.g., >, <,≥, and the like), textual commands, (e.g., GREATER THAN, LESS THAN, and the like), and the like. The INCOME HIGH and INCOME LOW columns 930, 931 indicate the limits of the desired range of the column INCOME. As shown in Figure 9, the first row 946 of control table 914 indicates an INCOME range of "0-10K" and the second row 948 of control table 914 indicates an INCOME range of "≥100K." The value indicating an INCOME HIGH value may be set to any appropriate value to indicate an appropriate upper range, such as infinity to specify ≥100K. As shown in Fig. 9, the INCOME HIGH value may be selected to be higher than all available INCOME values in source table 504. Any other suitable INCOME HIGH value may be appropriate, including no value (e.g., INCOME HIGH field is empty or null indicator), a value of zero, any value less than the INCOME LOW value, an infinity indicator, lack of an INCOME HIGH field, and the like. Similarly, to indicate a range with no lower boundary, e.g., ≤ 100, any suitable indicator may be used for the INCOME LOW field, such as a value of 0, an empty field, a negative value, and the like. The resulting partially materialized view 900 includes ID 524, AGE 526, STATE 528, and INCOME 530 columns as specified by the query expression 506 of Figure 5, and all the rows of the source table 504 and/or query result that have INCOME values that fall within the "0-10K" and "≥100K" ranges as specified by the control table 914.

An example declaration for the control table 914, partially materialized view 900, and query expression 506 of Figure 9 is shown below:
CREATE TABLE TABLE_914 (INCOME_LOW int, INCOME_HIGH int)
CREATE VIEW pmv900 WITH SCHEMABINDING AS
SELECT T.ID, T.AGE, T.STATE, T.INCOME
From T
WHERE EXISTS (SELECT * FROM TABLE_914 ct WHERE
T.INCOME > ct.INCOME_LOW AND
T.INCOME < ct.INCOME_HIGH)
CREATE UNIQUE CLUSTERED INDEX pmv900_clu
ON pmv900(ID)

The CREATE TABLE expression creates the control table 914 of Figure 9 with columns INCOME LOW and INCOME HIGH. The query expression of SELECT T.ID, T.AGE, T.STATE, T.INCOME determines the columns from the source table 504 (T) of Figure 5 included in the partially materialized view 900. The EXISTS statement references the control table TABLE_914 and determines the records included in the partially materialized view pmv900, namely, those records from the source table 504 (T) of Figure 5 that have an INCOME value (T.INCOME) between the INCOME LOW and INCOME HIGH values in some row of the control table TABLE_914. The CLUSTERED INDEX expression triggers creation of the partially materialized view pmv900. As noted above, the control table TABLE_914 and resulting partially materialized view pmv900 are empty of any records. To materialize information in partially materialized view pmv900, the user through client 230 or some component of the database server 220 of Figure 2 may populate at least one row ofthe control table ct914 with a value (e.g., 0 and 10K, and 100K and 999999K). Normal incremental view maintenance may then be used to correctly update the partially materialized view pmv900 to include the records which meet the control predicate when evaluated against the control table TABLE_914 instance illustrated in Figure 9..

### Figure 10

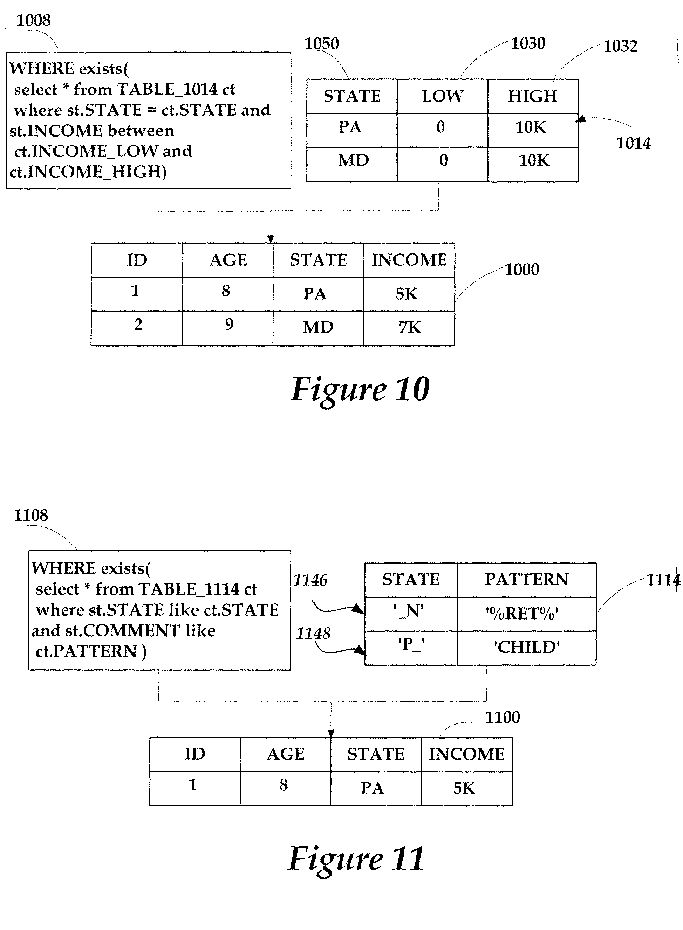

The example control predicate 1008 illustrated by Figure 10 specifies both an equality constraint on the STATE column 1050 and a range constraint using the INCOME_LOW column 1050 and INCOME_HIGH column 1052 of the control table 1014. Records from the source table 504 of Fig. 5 that meet both constraints are included in the partially materialized view 1000. In the example of Figure 10, one record meets the STATE=PA and INCOME between 0 and 10K predicate and one record meets the STATE=MD and INCOME between 0 and 10K predicate. As a result, in this example, the partially materialized view 1000 includes two records with the columns as defined by the query expression 506 of Figure 5.

An example declaration for the control table 1014, partially materialized view 1000, and query expression 506 of Figure 10 is shown below:
CREATE TABLE TABLE_1014 (STATE char(2), INCOME_LOW int,
INCOME_HIGH int)
CREATE VIEW pmv1000 WITH SCHEMABINDING AS
SELECT T.ID, T.AGE, T.STATE, T.INCOME
From T
WHERE EXISTS (SELECT * FROM TABLE_1014 ct WHERE
T.STATE = ct.STATE AND
T.INCOME between ct.INCOME_LOW AND ct.INCOME_HIGH)
CREATE UNIQUE CLUSTERED INDEX pmv1000_clu
ON pmv1000(ID)

The CREATE TABLE expression creates the control table 1014 of Figure 10 with columns STATE, INCOME LOW and INCOME HIGH. The query expression of SELECT T.ID, T.AGE, T.STATE, T.INCOME determines the columns from the source table 504 (T) of Figure 5 included in the partially materialized view 1000. The EXISTS statement references the control table ct1014 and determines the records included in the partially materialized view pmv1000, namely, those records from the source table 504 (T) of Figure 5 that have a STATE value (T.STATE) that is equivalent to the STATE value in some row of the control table TABLE_1014 and an INCOME value (T.INCOME) that is between the INCOME LOW and INCOME HIGH values in the same row of the control table TABLE_1014. The CLUSTERED INDEX expression triggers creation of the partially materialized view pmv1000. As noted above, the control table TABLE_1014 and resulting partially materialized view pmv1000 are initially empty of any records. To materialize information in partially materialized view pmv 1000, the user through client 230 or some component of the database server 220 of Figure 2 may populate a row of the control table ct1014 with values (PA, 0, and 10K) and another row with values (MD, 0, and 10K). Normal incremental view maintenance may then be used to correctly update the partially materialized view pmv1000 to include the records which meet the control predicate

### Figure 11

The example control predicate 1108 and control table 1114 of Figure 11 illustrates that constraints can be based on other operators than comparison operators. In this case, the LIKE operator is used with its string PATTERN parameter provided by rows in the control table 1114. It should be appreciated that operators other than LIKE can be used equally well with the applicable parameter values supplied by a control table. In the example of Figure 11, the first record 1146 of the control table 1114 selects records for inclusion in the partially materialized view 1100 that include a STATE abbreviation that ends with "N" and a COMMENT value that contains the string "RET". The second record 1148 of the control table 1114 of Figure 11 selects records for inclusion in the partially materialized view 1100 that include a STATE abbreviation that starts with "P" and a COMMENT attribute equivalent to the term "CHILD." As shown in Fig. 11, the '%' symbol matches any sequence of characters and the '_' symbol matches any single character. However, any suitable indicator of logical operations and/or wild card values may be suitable, including symbols, text strings, column labels, and the like. The resulting partially materialized view 1100 includes ID, AGE, STATE, and INCOME columns as specified by the query expression 506 and record(s) that meet the limitations specified by the control predicate 1108 and the control table 1114.

An example declaration for the control table 1114, partially materialized view 1100, and query expression 506 of Figure 11 is shown below:
CREATE TABLE TABLE_1114 (STATE char(2), PATTERN varchar(50))
CREATE VIEW pmv1 100 WITH SCHEMABINDING AS
SELECT T.ID, T.AGE, T.STATE, T.INCOME
From T
WHERE EXISTS (SELECT * FROM TABLE_1114 ct WHERE
T.STATE LIKE ct.STATE AND
T.COMMENT LIKE ct.PATTERN
CREATE UNIQUE CLUSTERED INDEX pmv1100_clu
ON pmv1100(ID)

The CREATE TABLE expression creates the control table 1114 of Figure 11 with columns STATE and PATTERN. The query expression of SELECT T.ID, T.AGE, T.STATE, T.INCOME determines the columns from the source table 504 (T) of Figure 5 included in the partially materialized view 1100. The EXISTS statement references the control table TABLE_1114 and determines the records included in the partially materialized view pmv1100, namely, those records from the source table 504 (T) of Figure 5 that have a STATE value (T.STATE) that is equivalent to the STATE value in some row of the control table TABLE_1114 and a COMMENT value (T.INCOME) that matches the LIKE pattern in the PATTERN column of the same row of the control table TABLE_1114. The CLUSTERED INDEX expression triggers creation of the partially materialized view pmvl 100. As noted above, the control table ct1114 and resulting partially materialized view pmv1100 are initially empty of any records. To materialize information in partially materialized view pmv1100, the user through client 230 or some component of the database server 220 of Figure 2 may populate one row of the control table TABLE_1114 with a value (`_N' and '%RET') and another row with value ('P_' and 'CHILD'). Normal incremental view maintenance may then be used to correctly update the partially materialized view pmv 1100 to include the records which meet the control predicate of the view.

### Figure 12

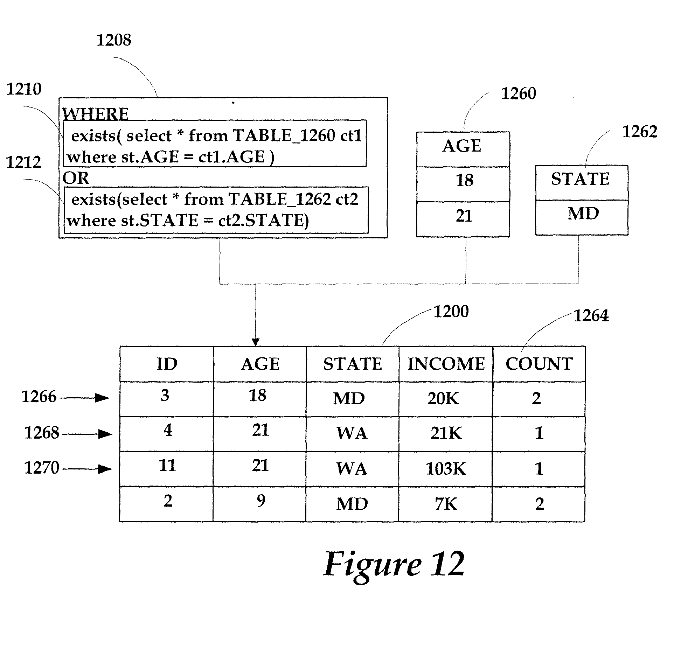

Figure 12 illustrates that multiple control predicates and control tables may be used to identify which records are to be included in the partially materialized view. For example, multiple control predicates may be joined with an 'OR' operator, such that a record is included in the partially materialized view if it satisfies any one of the control predicates. In the example illustrated by Figure 12, the overall control predicate 1208 is composed of two individual control predicates (1210 and 1212) connected by an 'OR' where each predicate references a separate control table (1260 and 1262, respectively). The resulting partially materialized view 1200, as shown in Fig. 12, includes the four view records where AGE=18, AGE =21, or STATE='MD', with the columns specified by the query expression 506 of Figure 5. In another example, were control predicates 1210 and 1212 joined by an 'AND' operator in overall control predicate 1208, the resulting partially materialized view would include all records where (AGE=18 AND STATE='MD') or (AGE=21 AND STATE='MD').

An example declaration for the control table 1260, control table 1262, partially materialized view 1200, and query expression 506 of Figure 12 is shown below:
CREATE TABLE TABLE_1260 (AGE int)
CREATE TABLE TABLE_1262 (STATE char(2))
CREATE VIEW pmv1200 WITH SCHEMABINDING AS
SELECT T.ID, T.AGE, T.STATE, T.INCOME, 1 AS COUNT
From T
WHERE EXISTS (SELECT * FROM TABLE_1260 ct WHERE
T.AGE=ct.AGE) OR
EXISTS (SELECT * FROM TABLE_1262 ct WHERE
T.STATE = ct.STATE)
CREATE UNIQUE CLUSTERED INDEX pmv1200_clu
ON pmv1200(ID)

The CREATE TABLE expressions create the control tables 1260, 1262 of Figure 12 with columns AGE and STATE respectively. The query expression of SELECT T.ID, T.AGE, T.STATE, T.INCOME determines the columns from the source table 504 (T) af Figure 5 included in the partially materialized view 1200. The EXISTS statement references the control tables TABLE 1260 and TABLE_1262 and determines the records included in the partially materialized view pmv1200, namely, those records from the source table 504 (T) of Figure 5 that have an AGE value (T.AGE) that is equivalent to the AGE value in some row of the control table TABLE_1260, or a STATE value (T.STATE) that are equivalent to the STATE value in some row of the control table TABLE_1262. The CLUSTERED INDEX expression triggers creation of the partially materialized view pmv1200. As noted above, the control tables TABLE_1260 and TABLE_1262 and resulting partially materialized view pmv1200 are empty of any records. To materialize information in partially materialized view pmv1200, the user through client 230 or some component of the database server 220 of Figure 2 may populate at least one row of the control tables TABLE_1260, TABLE_1262 with values (18, 21, or 'MD'). Normal incremental view maintenance may then be used to correctly update the partially materialized view pmv1200 to include the records which meet the control predicate ofthe view

Where multiple control predicates define the records that are included in the partially materialized view, one or more columns may be added to the partially materialized view to indicate the number and/or identity of control predicates and control table rows under which each record qualifies to be included in the partially materialized view. In the example shown in Figure 12, for each record of the partially materialized view 1200, the value of the COUNT column 1264 equals the number of control predicates which are satisfied by the corresponding record from the source table 504.

Such additional columns may be used to determine which records of the partially materialized view are to be deleted when a control table is modified or removed. For example, as shown in Figure 12, only if the COUNT value is greater than zero, can the record of the partially materialized view remain in the partially materialized view 1200. If the count value is zero, the record must be removed from the partially materialized view since it does not satisfy any of the control predicates. In the example of Figure 12, if the value "21" were removed from the first control table 1260, the second and third rows 1268, 1270 would be removed from the partially materialized view 1200, since the COUNT for these rows would be reduced to zero. If the value "18" were removed from the first control table 1260, no rows would be removed from the partially materialized view 1200. More specifically, the first row 1266 of the partially materialized view 1200 would no longer meet the modified first control predicate 1210, since AGE=18 is removed. However, the first row 1266 would still meet the second control predicate 1212, because STATE=MD. As a result, the COUNT value of the first row 1266 would be reduced from "2" to "1," indicating that the record is a valid entry in the partially materialized view 1200 according to the modified control tables. In an alternative arrangement, any suitable indicator, such as multiple count columns, columns identifying rows in control tables, additional auxiliary tables, and the like, may be included which indicate in some manner how and/or what control predicates and control table rows qualify to be included in the partially materialized view.

### Dynamic Control Tables

The control tables can be used to manipulate or restrict the records that are included in the partially materialized view in a variety of ways. For example, referring to Figure 5, the control tables can be employed such that the most recently accessed records of a view are maintained in the partially materialized view 500. As the access pattern changes, the control tables may be adjusted, automatically or manually, to keep the most recently accessed rows of the view in the partially materialized view. For example, a partially materialized view, source table, or other view may include a column indicating the number of times a record of the view is accessed. The control table may include that ACCESS count parameter in a predicate such as a range restriction indicating a minimum threshold value in a predetermined period of time or number of accesses. As the ACCESS count parameter value is modified over time, the partially materialized view maybe automatically updated with view maintenance to cull unused or less popular records from the partially materialized view and/or include newly popular records from the source table.

### Common Control Tables

Multiple partially materialized views may reference or depend upon a common control table. More particularly, different partially materialized views may share a common control table. For example, as shown in Figure 6, control table 614 may control the partially materialized view 600 and other partially materialized views as well. More specifically, another partially materialized view may have a view defining expression referencing source tables, different predicate restrictions, and/or different parameter inclusions/exclusions.

### Partially Materialized View as Control Table

A partially materialized view may itself be used as a control table for another partially materialized view. Referring to Figure 9, the control table 914 controls the partially materialized view 900 to include records having INCOME within a defined range. In some cases, queries to the database may request suppliers in states where customers included in the partially materialized view 900 reside. Thus, a second partially materialized view may be created with a query expression referencing a supplier source table (not shown) and a control predicate dependent on the STATE column of partially materialized view 900 of Figure 9. This second partially materialized view would therefore include records of suppliers in PA, MD, OH, NY, CA, and WA. Consequently, control table 914 controls partially materialized view 900, which in turn, controls the second partially materialized view of suppliers.

### User Defined Functions

A control table may specify the values of a user defined function or other expression applied to a column rather than the actual value of the column. In this manner, the control predicate may reference the user defined function, and the control table may provide the input values to that user defined function. In one example, a user may define a function BRACKET which determined the tax bracket based upon a given income level. In this manner, referring to the query expression 306 and the source table 304 of Figure 3, a partially materialized view of records within an identified tax bracket may be created. More particularly, the view defining expression 318 may include the user-defined function BRACKET in the control predicate and the control table specifies the tax brackets of interest. The following example definition, discussed further below, may materialize a partially materialized view based upon a control predicate including a user defined function BRACKET and referencing source table 504 of Figure 5 as T.
CREATE TABLE ctTAX (bracketID int primary key)
CREATE VIEW pmv WITH SCHEMABINDING AS
SELECT T.ID, T.AGE, T.STATE, T.INCOME
From T
WHERE EXISTS (SELECT * FROM ctTAX ct WHERE
BRACKET(T.INCOME) = ct.bracketID)
CREATE UNIQUE CLUSTERED INDEX pmv_clu
ON pmv(ID)

### Partial View Group

The term partial view group may identify a set of related partial views and control tables whose contents are controlled directly or indirectly by the values of one or more control tables. Those views in a partial view group may be called "linked partial views". For example, a partial view group may comprise partially materialized view pmv and the control table may include control Table Cₜ.

A partial view group may be illustrated as a directed graph, where nodes denote either control tables or partial views and edges denote control constraints (defined by control predicates). The direction of an edge for a control constraint is from a partial view to its control table(s).

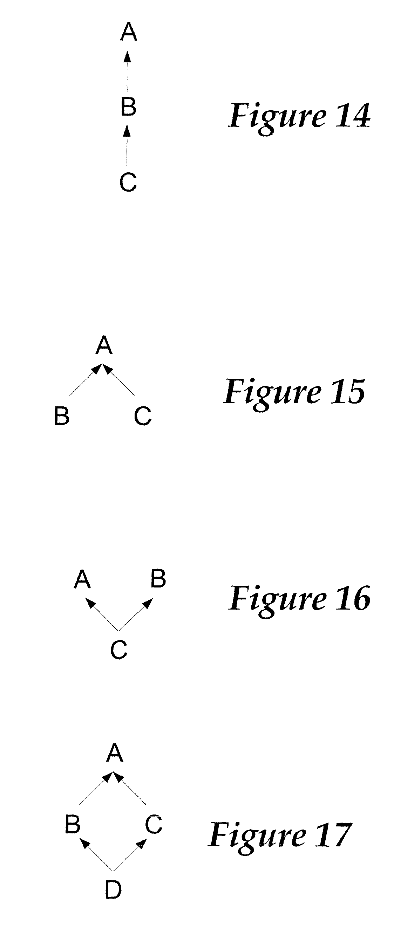

Figures 14-17 show examples of partial view graphs. Figure 14 represents the case when a partial view (C) uses another partial view (B) as a control table. In Figure 15, two partial views (B and C) share a common control table (A). It is to be appreciated that the views B and C do not necessarily use the same control predicates. Figure 16 shows the case when a partial view (C) has two control tables (A and B). Figure 17 shows a combination of different partial views.

Views in current database systems, including Microsoft SQL Server, cannot reference themselves directly or indirectly, because such cycles complicate view expansion and view maintenance. As a result, partially materialized views also inherit this property. Accordingly, there may not exist a cycle in a partial view group's directed graph. In this manner, a topological order will always exist in a partial view graph. Therefore, any stack of partial views can be properly maintained.

### Using Partially Materialized Views for Query Evaluation

In modern relational database systems such as Microsoft SQL Server, the evaluation of a query Q includes two steps:
1. Query compilation (also called query optimization). This step may determine the most efficient way to execute the query and generates a query execution plan. If an execution plan already exists for an incoming query, this step is normally skipped.
2. Query execution. This step executes the query according to the plan, thereby producing the query result.

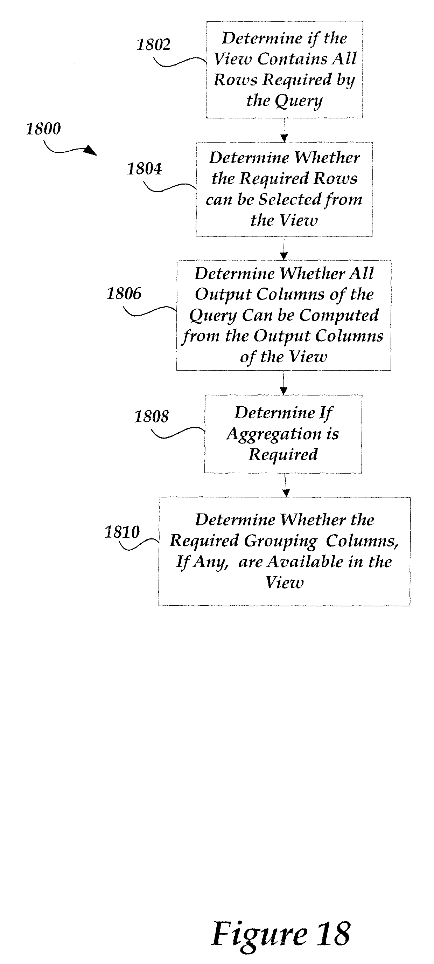

To determine whether a newly received query expression Q can be computed from a partially materialized view, a view matching algorithm may be used. One example of a view matching algorithm for fully materialized views is described in Goldstein and Larson, "Optimizing Queries Using Materialized Views: A Practical Scalable Solution," SIGMOD, 2001, incorporated by reference herein. The algorithm by Goldstein and Larson evaluates whether a query expression Q can be computed from a fully materialized view V and is illustrated in the method 1800 of Figure 18. A database server determines 1802 whether view V contains all rows required by query Q. If so, then the database server determines 1804 whether the required rows can be selected from view V, determines 1806 whether all output columns of query Q can be computed from the output columns of the view V, determines if aggregation is required 1808, and, if so, determines 1810 whether the required columns are available in view V.

If the view is fully materialized, the method 1800 of Figure 18 can all be completed at compile time. However, if the view is partially materialized, the actual content of the partially materialized view is limited by the control predicate and the contents of its control table(s). In other words, the rows currently materialized in the partially materialized view are not known until execution time. Accordingly, the determination 1802 of the view V containing all rows required by the query Q in the view matching algorithms of Figure 18 should be modified to support partially materialized views. Namely, the determination 1802 may be divided into a compile time test and an execution time test. The other steps may remain the same and can all be completed at compile time.

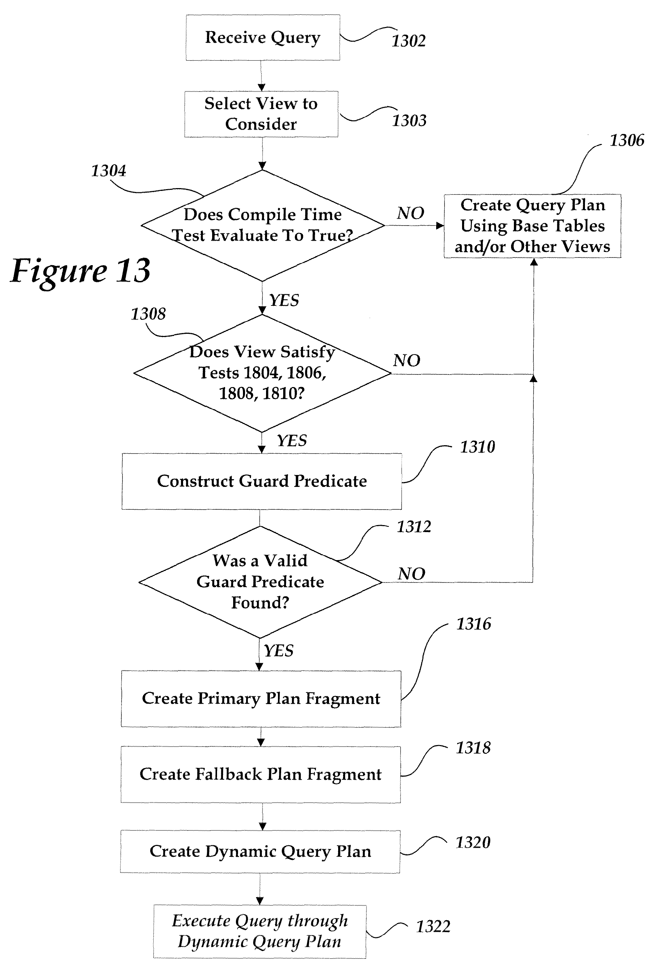

One example of a view matching method 1300 supporting partially materialized views is shown in the flow chart diagram of Figure 13. Initially, a query or part of a query may be received 1302. For example, the database server 220 of Figure 2 may receive a query from the client tool 230 and forward it to the database component responsible for view matching. The view matching component then selects, among the available views, a view to consider 1203, which in the subsequent description is assumed to be a partially materialized view. Any suitable view matching algorithm may be used to select the view to consider. The query may reference one or more source tables and may include one or more parameters whose values will be supplied at the time of execution of the query. The example query Q shown below will be used to illustrate the description in this section, although it is to be appreciated that this query is only an example and any suitable query may be used.
QUERY Q:
SELECT T.ID, T.AGE, T.STATE, T.INCOME
FROM T
WHERE T.AGE > 10 AND T.STATE='MD'

In this example, the database 210 of Figure 2 may contain the partially materialized view pmv600 defined earlier and illustrated in Figure 6. During optimization of query Q, an optimizer of database server 220 of Figure 2 may attempt to determine whether the query can be computed from partially materialized view pmv600. Since it is not known until run time of the query Q which records exist in the partially materialized view pmv600, a portion of determining whether the partially materialized view contains all the required records is delayed to run time of query Q, e.g., the execution time test. However, a portion of the determination of whether the partially materialized view contains all the required records may be accomplished at compile time of the query, e.g., the compile time test.

During compile time, the database server including an optimizer or other suitable component may perform the compile time test by determining 1304 whether the partially materialized view would contain all records required by the query if it were fully materialized. The definition of the fully materialized view may be obtained by eliminating all control predicates from the view defining expression and the compile time test may be determined using suitable view matching algorithms, such as determining 1802 whether a view contains all rows required by query Q described with reference to Figure 18. If the test is negative, a query execution plan may be created 1306 that computes the query result from base tables and possibly also materialized views other than the view currently being considered. In some cases a source table may be used to compute the query, and in other cases, at least a portion of the query may be computed from the partially materialized view and then combined with data computed from other sources to provide the required records.

For the example query Q and view pmv600, the compile time test evaluates to true because the fully materialized version of the partially materialized view would contain all rows of table 504 (T). If the compile time test evaluates to true, the remaining tests 1804, 1806, 1808, and 1810 in the view matching procedure described above with reference to Figure 18 may then be evaluated 1308. If any of these tests of 1308 fail, the current partially materialized view cannot be used by the query. Accordingly, a query execution plan may be created 1306 based on the base table or other suitable views.

If the tests 1308 are successful, a guard predicate may be constructed 1312 that verifies that the partially materialized view contains the records required by the query. The guard predicate implements the execution time test. For the example query Q and partially materialized view pmv600 described above, the optimizer or other suitable component of the database system 200 may attempt to construct a guard predicate that verifies the presence in pmv600 of the rows required by the query to be evaluated at execution time of the query Q. However, the form of the guard predicate depends on the type of control predicate and control tables used and it is not always possible to construct a correct guard predicate. For example, if the predicate on T.STATE in the example query Q above were modified to T.STATE <> `MD', a valid guard predicate could not be constructed because it would be impossible to determine if the partially materialized view contained all rows where STATE ≠ 'MD'.

If a guard predicate test can not be constructed, the partially materialized view may be rejected, and a query execution plan may be created 1306 that computes the query from the base tables and/or other views. If a valid guard predicate is determined, a dynamic query plan may be constructed 1320 at compile time of the query. The dynamic query plan may be constructed from three components: the guard predicate, a primary plan fragment and a fallback plan fragment. The primary plan fragment may be constructed 1316 to use the partially materialized view in cases where the guard predicate evaluates to true. The fallback plan may be constructed 1318 to compute the query from base tables and/or other views for use in cases where the guard predicate evaluates to false. The dynamic query execution plan may then constructed 1320 by combining the three components with a plan selection operator, typically called a SwitchUnion or ChoosePlan operator. If the guard predicate evaluates to true, the execution time test may select the primary plan and if the guard predicate evaluates to false, the execution time test may select the fallback plan to computer the query.

The construction of the guard predicate for different kinds of control predicates and control tables are discussed further below.

### Guard Predicate for Equality Control Tables

An equality control table may be one that supports equality control predicates.

The control tables 614, 714, 814, and 1214 of Figures 6, 7, 8, and 12 respectively and their respective partially materialized views 600, 700, 800, and 1200 are of this type. The guard predicate for an equality control table may be expressed as a lookup query against the control table that verifies that a row with a matching value exists in the control table. For example, with reference to Figure 7, suppose the following query is received:
SELECT T.ID, T.AGE, T.STATE, T.INCOME
FROM T
WHERE T.ID=@ID
@ID is a parameter whose value is known at run time. The above example query may be computed from the partially materialized view pmv700 provided that control table TABLE_714 contains a row with ID value equal to the value of the parameter @ID. Consequently, the guard predicate can be expressed (using SQL) as follows:
EXISTS(SELECT * FROM TABLE_714 WHERE ID=@ID)
This guard predicate when evaluated as the execution time test requires an exact match. More particularly, the guard predicate is true only if the actual value of @ID occurs in the control table TABLE_714.

In another example, a query may contain an IN predicate as shown below:
SELECT T.ID, T.AGE, T.STATE, T.INCOME
FROM T
WHERE T.ID IN (1, 5, 8, 12) AND T.STATE = 'MD'

Again, the query can be computed from pmv700 if the control table TABLE_714 contains the values 1, 5, 8, and 12. Hence, the guard predicates becomes (using SQL as an example):
EXISTS(SELECT * FROM TABLE_714 WHERE ID IN (1, 5, 8, 12)
HAVING COUNT(*) = 4)

The condition T.STATE = 'MD' is not included in the guard predicate because T.STATE is not referenced in the control predicate of pmv700, e.g., whether a record is materialized or not, does not depend on its STATE value.

These two queries cover the main types of queries that can be computed from a partially materialized view with an equality control table, namely, the query must constrain the column(s) referenced by the control predicate to a finite number of values known at run time. The guard predicate, when evaluated as the execution time test, then verifies that the values occur in the control table.

### Guard Predicate for Range Control Table

A partially materialized view with a range control table may support queries with range predicates. The control table 914 of Figure 9 and its partially materialized view 900 is of this type. The guard predicate for a range control table may be expressed as a query evaluating whether the range specified in the query is contained within at least one range specified in the control table.

For example, with reference to Figure 9, consider the following query:
SELECT T.ID, T.AGE, T.STATE, T.INCOME
FROM T
WHERE T.INCOME > 12K AND T.INCOME < 24K

The query specifies an income range of 12K to 24K and can be computed from the partially materialized views pmv900 if there exists a row in the control table TABLE_914 the includes the query range. Hence, the guard predicate is constructed as (using SQL):
EXISTS(SELECT * FROM TABLE_914 ct
WHERE INCOME_LOW <= 12K AND INCOME_HIGH >= 24K)

The example guard predicate requires that the desired range be included within a single record of the control table. However, it is to be appreciated that in some cases it may be appropriate to evaluate whether multiple records of the control table may jointly cover the desired range. Similarly, it is to be appreciated that a partially materialized view with a range control table can also be used for queries specifying an equality or IN constraint because such constraints can be rewritten as range constraints,

### Guard Predicate for Control Table with Equality And Range Constraints

The materialized view pmv1000, illustrated in Figure 10, has a control predicate and control table that specify an equality constraint on STATE and a range constraint on INCOME. A query cannot be computed from the view pmv 1000 unless it specifies appropriate restrictions on both the STATE and INCOME columns. By way of example, consider the following query:
SELECT T.ID, T.AGE, T.STATE, T.INCOME
FROM T
WHERE T.STATE ='PA'
AND T.INCOME > 5K AND T.INCOME < 9K

The query can be computed from the partially materialized view pmv 1000 if there exists a row in the control table TABLE_1014 with a STATE value equal to 'PA' and a range covering the range of the query. Based on this, the following guard predicate may be constructed (in SQL):
EXISTS(SELECT * FROM TABLE_1014 ct
WHERE ct.STATE ='PA'
AND ct.INCOME_LOW <= 5K AND ct.INCOME_HIGH >= 9K)

Referring to Figure 10, the first row in the control TABLE_1014 satisfies the guard predicate and hence the query can be computed from the view pmv1000. Even though this example considers only the case of a control table combining an equality constraint and a range constraint, it is to be appreciated that analogous reasoning can be applied to control tables combining multiple types of conditions.

### Multiple Control Tables

A partially materialized view may have multiple control tables. The guard predicate and types of queries which can be computed from the corresponding partially materialized view depend on how the control tables are used by the control predicate. The partially materialized view pmv1200, illustrated in Figure 12, has two control tables, each one used in separate control predicates connected by OR. Consequently, one can treat the view as two separate partially materialized views, one controlled by control table TABLE_1260 and the other one controlled by control table TABLE_1262. In this manner, the partially materialized view 1200 may be used for queries with equality constraints on T.AGE and also for queries with equality constraints on T.STATE. The guard predicates for this example may be constructed in the manner described earlier for equality control tables. In this case, the two control tables 1260, 1262 are both equality control tables but it is to be appreciated that other types of control tables can be handled in an analogous manner.

Having now described some illustrative embodiments of the invention, it should be apparent to those skilled in the art that the foregoing is merely illustrative and not limiting, having been presented by way of example only. Numerous modifications and other illustrative embodiments are within the scope of one of ordinary skill in the art and are contemplated as falling within the scope of the invention. In particular, although many of the examples presented herein involve specific combinations of method operations or system elements, it should be understood that those operations and those elements may be combined in other ways to accomplish the same objectives. Operations, elements, and features discussed only in connection with one embodiment are not intended to be excluded from a similar role in other embodiments. Moreover, use of ordinal terms such as "first" and "second" in the claims to modify a claim element does not by itself connote any priority, precedence, or order of one claim element over another or the temporal order in which operations of a method are performed, but are used merely as labels to distinguish one claim element having a certain name from another element having a same name (but for use of the ordinal term) to distinguish the claim elements.

The embodiments of the invention in which an exclusive property or privilege is claimed are defined as follows:

## Claims

1. A method of partially materializing a view of database records, comprising:
a) defining a view of records in one or more source tables;
b) identifying a subset of records of the view that are to be materialized; and
c) storing the subset of records to partially materialize the view.

2. The method of claim 1 wherein identifying the subset of records that are materialized includes a control predicate referencing one or more control tables.

3. The method of claim 2 further comprising changing one or more control tables, and in response to the changed one or more control tables, updating the subset of records.

4. The method of claim 3 wherein changing the one or more control tables includes changing a value of at least one of a column and a field of the control table.

5. The method of claim 3 wherein changing the one or more control tables includes adding a data record to at least one control table.

6. The method of claim 3 wherein changing the one or more control tables includes removing a data record from at least one control table.

7. The method of claim 1 further comprising updating the at least one record of the one or more source tables, and in response, automatically updating the stored subset of records.

8. The method of claim 7 wherein automatically updating includes utilizing view maintenance algorithms.

9. The method of claim 2 further comprising before changing one or more control tables, receiving a query and in response compiling a query plan, and after changing one or more control tables, executing the query using the compiled query plan.

10. The method of claim 1 further comprising determining at the execution time of the query whether a query can utilize the partially materialized view as part of a query execution plan.

11. The method of claim 10 wherein determining whether a query can utilize the partially materialized view includes determining if a runtime constant af the query is contained in at least one control table record.

12. The method of claim 1 1 wherein determining if a plurality of runtime constants ofthe query are contained in multiple control table records.

13. A data structure, comprising:
a) a view defining expression including a query expression and at least one control predicate, the query expression referencing one or more source tables, the control predicate referencing one or more control tables, the view defining expression identifying a subset of records in a result of the query expression to be included in a partially materialized view.

14. The data structure of claim 13 further comprising a partially materialized view constructed and adapted to store the subset of records.

15. The data structure of claim 13 further comprising the one or more control tables referenced by the control predicate.

16. The data structure of claim 13 wherein the control table includes a plurality of control tables which identify the subset of records.

17. The data structure of claim 13 wherein the control table includes a table stored in a relational data store.

18. The data structure of claim 13 wherein an expression of the control predicate includes a user defined function.

19. The data structure of claim 13 wherein the control predicate references a second partially materialized view.

20. The data structure of claim 13 wherein the control predicate specifies at least one equivalency constraint.

21. The data structure of claim 13 wherein the control predicate specifies at least one of an upper bound and a lower bound.

22. The data structure of claim 13 wherein the control predicate specifies at least one of an upper and a lower bound that is used to identify the subset of records that are materialized.

23. The data structure of claim 13 wherein the control predicate specifies an indicator of records that are to be excluded from the partially materialized view.

24. One or more computer-readable media containing executable instructions that, when executed, implement a method comprising:
a) storing at least one record to partially materialize a view of a query result based on a view defining expression and at least one source table;
b) receiving a query including a query predicate;
c) determining whether the partially materialized view contains all records required by the query predicate;
d) computing the query from the partially materialized view if the partially materialized view contains all records required by the query predicate.

25. The one or more computer readable media as recited in claim 24, wherein the method further comprises computing at least a portion of the query on at least one source table if the partially materialized view does not contain all records required by the query predicate.

26. The one or more computer readable media as recited in claim 24, wherein determining whether the partially materialized view contains all records required by the query predicate includes evaluating a compile time test and evaluating an execution time test of the query.

27. The one or more computer readable media as recited in claim 26, wherein the compile time test includes forming a fully materialized view expression by removing a control predicate from the view defining expression, and determining if a fully materialized view resulting from the fully materialized view expression would contain all records required by the query predicate.

28. The one or more computer readable media as recited in claim 27, wherein determining whether the partially materialized view contains all records required by the query predicate includes creating a guard predicate including at least one condition that references an execution time constant of the query predicate and at least a portion of at least one control table.

29. The one or more computer readable media as recited in claim 28, wherein creating the guard predicate includes generating a query predicate evaluating an equivalency between a run time constant and a parameter value of the at least one control table.

30. The one or more computer readable media as recited in claim 28, wherein creating the guard predicate includes generating a query predicate comparing a run time constant and a range parameter value of the at least one control table.

31. The one or more computer readable media as recited in claim 28, further comprising generating a dynamic query plan including the guard predicate, a primary plan fragment referencing the partially materialized view, and a fallback plan fragment referencing one or more source tables.

32. The one or more computer readable media as recited in claim 28, wherein evaluating the execution time test includes evaluating the guard predicate.

33. The one or more computer readable media as recited in claim 32, further comprising computing the query based on the primary plan fragment if the guard evaluates to true.

34. The one or more computer readable media as recited in claim 32, further comprising computing the query based on the fallback plan fragment if the guard predicate evaluates to false.

35. The one or more computer readable media as recited in claim 26, wherein the execution time test is evaluated at execution time of the query.

36. One or more computer-readable media containing executable components comprising:
a) means for storing a partially materialized view, a control table, and one or more source tables;
b) means for receiving a query;
c) means for compiling the query including means for determining whether the partially materialized view would contain all records required by the query if fully materialized, means for creating a guard predicate, and means for creating a dynamic query plan including the guard predicate; and
d) means for executing the query based on the dynamic query plan and an evaluation of the guard predicate at execution time of the query.
